# EUROPÄISCHE PATENTSCHRIFT

(11) **EP 1 050 708 B1**
(45) Veröffentlichungstag und Bekanntmachung des Hinweises auf die Patenterteilung: **02.08.2006**
(21) Anmeldenummer: 00109359.0
(22) Anmeldetag: 02.05.2000
(51) Int. Cl.: F16P 3/08

(54) **Steuerungsvorrichtung zur Steuerung sicherheitsrelevanter Funktionen einer gefahrbringenden Maschine**
Control device for the control of safety functions of a machine susceptible of beying dangerous
Dispositif de contrôle de fonctions relatives à la sécurité d'une machine présentant des dangers

(30) Priorität: 03.05.1999 DE 19920340
(43) Veröffentlichungstag der Anmeldung: 08.11.2000
(73) Patentinhaber: Schwelling, Hermann, 88682 Salem (DE)
(72) Erfinder: Schwelling, Hermann, 88682 Salem (DE)
(74) Vertreter: Fürst, Siegfried

(56) Entgegenhaltungen:
- DE-A- 3 010 081
- DE-A- 4 412 653
- DE-A- 19 649 593
- US-A- 2 315 151
- US-A- 5 721 410

## Beschreibung

Die vorliegende Erfindung betrifft eine Steuerungsvorrichtung und ein Verfahren zur Steuerung sicherheitsrelevanter Funktionen einer gefahrbringenden Maschine. Bei den gefahrbringenden Maschinen kann es sich beispielsweise um Bearbeitungszentren für die spanende Bearbeitung von Werkstücken, Stanz- oder Tiefziehpressen handeln. Insbesondere kann es sich um Ballenpressen handeln, wie sie aus der DE-A 30 10 081 bekannt sind.

Die aus der DE-A 30 10 081 bekannte Ballen- bzw. Abfallpresse 100 ist in den Fig. 8 bis 10 gezeigt wird. Sie weist Bereiche a, b bzw. c für Antriebselemente, einen Einfüllschacht bzw. einen Preßschacht auf. Wie in der Frontansicht gemäß Fig. 8 zu erkennen ist, ist die Ballenpresse 100 mit einer Preßschachttür 101 versehen, welche durch Schwenken um eine vertikale Achse geöffnet werden kann. In der oberen Hälfte der Preßschachttür 101 ist eine Einfüllschachttür 102 um eine horizontale Achse schwenkbar gelagert. Zum Einfüllen zu verpressender Wertstoffe, beispielsweise Umverpackungen, kann die Einfüllschachttür 102 bei geschlossener Preßschachttür 101 geöffnet werden. Sobald die Einfüllschachttür 102 wieder geschlossen ist, wird der Pressenantrieb angeschaltet und die eingefüllten Wertstoffe werden durch Herunterfahren des Preßstempels zu einem leicht handhabbaren Ballen zusammengepreßt. Nach Beendigung des Preßvorgangs kann die Preßschachttür 101 bei geschlossener Einfüllschachttür 102 geöffnet und der gepreßte Ballen entnommen oder ausgeworfen werden.

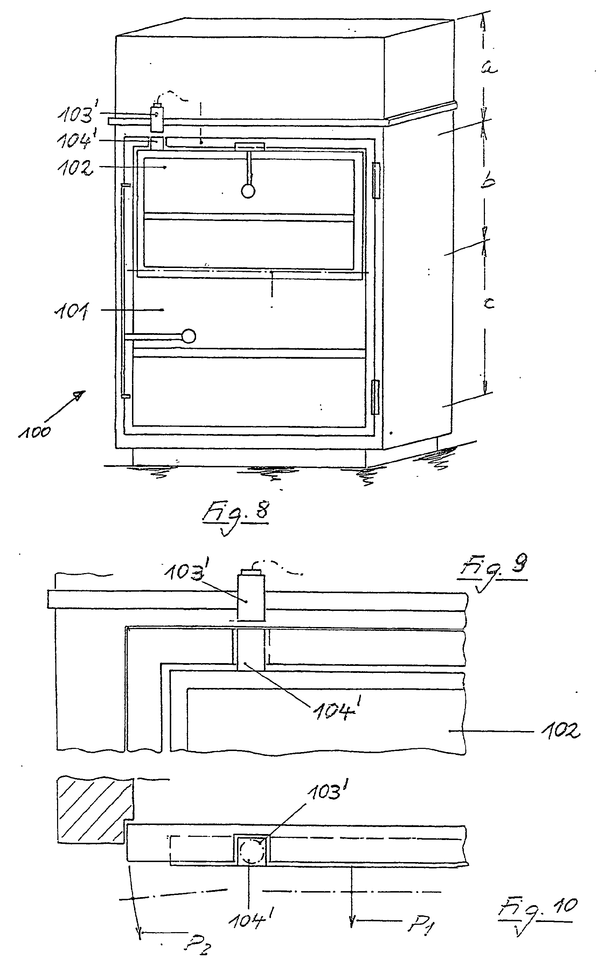

Um die Gesundheit oder das Leben des Bedieners gefährdende Unfälle bei geöffneter Einfüllschachttür 102 und/oder Preßschachttür 101 auszuschließen, muß gewährleistet sein, dass sich der Pressenantrieb automatisch abschaltet, sobald eine dieser Türen geöffnet wird. Hierzu ist im oberen Bereich des Gehäuses der Ballenpresse 100 ein Sicherheitsschalter 103' befestigt. Bei diesem Sicherheitsschalter 103' kann es sich je nach Bedarf um elektronische Näherungsschalter auf induktiver, kapazitiver bzw. optischer Basis, um Reed-Kontaktschalter oder um sonstige für Personenschutz zugelassene Schalter, insbesondere auch Schalter mit zwangsgeführten Kontakten, handeln. Unabhängig von dem speziellen Typ des gewählten Sicherheitsschalters 103' ist am Türrahmen der Einfüllschachttür 102 eine Schaltfahne 104' angeordnet. Je nach Typ des Sicherheitsschalters 103' kann es sich bei der Schaltfahne 104' um kodierte Metallstücke oder Magnete handeln. Sicherheitsschalter 103' und Schaltfahne 104' sind in vergrößerter Darstellung in Fig. 9 gezeigt. Fig. 10 zeigt eine vergrößerte Darstellung einer Ansicht auf den Bereich des Sicherheitsschalters 103' von oben.

Sobald die Einfüllschachttür 102 gemäß Pfeil P₁ oder die Einfüllschachttür 101 gemäß Pfeil P₂ geöffnet wird, entfernt sich die Schaltfahne 104' von dem Sicherheitsschalter 103'. Dadurch wird in diesem ein elektrisches Signal ausgelöst, welches mit Hilfe einer in dem Sicherheitsschalter 103' vorgesehenen Auswerteelektronik ausgewertet, d.h. auf sichere Betriebszustände überprüft wird. Der Sicherheitsschalter 103' selbst generiert die sicherheitsrelevanten Ausgangssignale "Tür auf" bzw. "Tür zu", welche direkt an diejenige Einrichtung weitergeleitet werden, welche gegebenenfalls den Pressenantrieb abschaltet.

Bei dem gemäß der Fig. 8 bis 10 verwendeten Sicherheitsschalter 103' wirkt es sich nachteilig aus, daß sich die Auswerteelektronik in dem Sicherheitsschalter 103' selbst befindet, also baueinheitlich unlösbar mit dem Sicherheitsschalter 103' verbunden ist. Zum einen kann der Sicherheitsschalter 103' samt seiner Auswerteelektronik leicht beschädigt werden, da er sich nahe an der Einfüllöffnung der Ballenpresse 100 befindet. Aufgrund der verhältnismäßig hohen Kosten eines Sicherheitsschalters mit integrierter Auswerteelektronik führt dies zu entsprechend hohen Anschaffungs- bzw. Reparaturkosten der Ballenpresse 100. Zum anderen weist ein Sicherheitsschalter mit integrierter Auswerteelektronik keinerlei Flexibilität auf, wenn es darum geht, die Methodik der Auswertung des sicherheitsrelevanten Signals zu modifizieren. Letzteres kann beispielsweise zur Anpassung an geänderte Sicherheitsvorschriften erforderlich sein.

Aus der DE 196 49 593 A ist eine Verriegelungseinrichtung zur Sicherung des Zugangs zu Maschinen, wie beispielsweise Pressen oder Werkzeugmaschinen, bekannt. Der Gefahr bringende Bereich der Maschine wird mittels einer oder mehrerer Türen gesichert. Optische Sensoren erfassen, ob sich die Türen in geöffnetem oder geschlossenem Zustand befinden. Die von den Sensoren gelieferten Signale werden in einer Auswerteeinheit ausgewertet, die an einer außerhalb der Maschine befindlichen Stelle angeordnet ist. Dabei ist nachteilig, dass einerseits außerhalb der Maschine Raum zur Anordnung der Auswerteeinheit zur Verfügung stehen muss und andererseits Signalleitungen aus der Maschine heraus zu der Auswerteeinheit geführt werden müssen.

Aus der US-A-5 721 410 ist eine Sicherheitsvorrichtung für eine Druckmaschine bekannt, bei der das Druckwerk mittels eines verschließbaren Schutzgitters vor unbeabsichtigtem Zugriff gesichert ist. Ob sich das Schutzgitter in geschlossenem oder geöffnetem Zustand befindet, wird mit Hilfe eines Schalters überwacht, der einen Öffnungs- und einen Schließkontakt aufweist. Die Anschlüsse dieser Kontakte sind mit einer Steuereinrichtung verbunden, die innerhalb des Gestells der Druckmaschine angeordnet ist und den Motor der Druckmaschine spannungslos schaltet, wenn das Schutzgitter geöffnet wird. Bei einer derartigen Anordnung ist zwar kein Raum außerhalb der Druckmaschine zur Anordnung der Steuereinrichtung erforderlich, jedoch besteht in bzw. an der Druckmaschine Platzbedarf dahingehend, dass die separate Steuereinrichtung zur Steuerung der Sicherheitsfunktion insbesondere in für Wartungs- und Reparaturarbeiten zugänglicher Weise angeordnet werden muss.

Es ist daher die Aufgabe der vorliegenden Erfindung, eine Steuerungsvorrichtung zur Steuerung sicherheitsrelevanter Funktionen einer gefahrbringenden Maschine zu schaffen, welche insbesondere die den Sicherheitsschalter betreffenden Reparaturkosten der gefahrbringenden Maschine reduziert und gleichzeitig eine höhere Flexibilität bei erforderlich werdenden Änderungen der Methodik zur Signalauswertung gewährleistet.

Diese Aufgabe wird mittels einer Steuerungsvorrichtung gemäß Anspruch 1 gelöst. Weitere Ausgestaltungen der vorliegenden Erfindung ergeben sich aus den Unteransprüchen.

Mit Beabstandung zwischen Auswerteelektronik und Sicherheitsschalter im Sinne der vorliegenden Erfindung ist gemeint, dass sich die Auswerteelektronik hinreichend weit entfernt von solchen Bereichen befindet, in welchen für sie eine Beschädigungsgefahr besteht. Darüber hinaus ist die Auswerteelektronik als Bestandteil derjenigen Steuerelektronikanordnung ausgebildet, welche die sonstigen Betriebsfunktionen der gefahrbringenden Maschine steuert und daher ohnehin vorhanden ist. Dadurch kann vorzugsweise eine einzige Steuerelektronikplatine vorgesehen werden, auf welcher sowohl die Steuerelektronik zur Steuerung der sonstigen Betriebsfunktionen als auch die Auswerteelektronik zum Auswerten des von dem Sicherheitsschalter kommenden Signals angeordnet werden. Da Elektronikbauteile auf eine Elektronikplatine aufgesteckt oder aufgelötet werden können, wird somit die erfindungsgemäß gewünschte hardware- und/oder softewareseitige Flexibilität hinsichtlich der Anpassung der Auswertemethodik sowie des Steuerungsablaufes auf besonders vorteilhafte Weise erreicht.

Die in Zusammenhang mit der erfindungsgemäßen Steuerungsvorrichtung zu verwendenden Sicherheitsschalter weisen ausschließlich Mittel zur Erfassung einer Änderung der Stellung der Tür auf. Sie enthalten keinerlei Elemente einer ihnen räumlich zugeordneten Auswerteelektronik und sind daher Sicherheitsschalter ohne eigene Auswerteelektronik. Derartige Sicherheitsschalter können beispielsweise Reed-Kontaktschalter sein, welche ausschließlich aus zwei in einem mit Schutzgas gefüllten Glasröhrchen angeordneten Kontaktzungen bestehen. Es sind auch elektronische Näherungsschalter auf induktiver, kapazitiver bzw. optischer Basis, Reed-Kontaktschalter oder sonstige für Personenschutz zugelassene Schalter, insbesondere auch Schalter mit zwangsgeführten Kontakten, denkbar.

Die Auswerteelektronik selbst kann aus Redundanzgründen zwei Prozessoren aufweisen, welche unabhängig voneinander arbeiten, jedoch miteinander kommunizieren und sich dadurch gegenseitig überwachen. Um zu vermeiden, dass ein und derselbe Syntaxfehler in der Programmierung der Prozessoren zu derselben Fehlfunktion beider Prozessoren führt, können die Prozessoren in unterschiedlichen Programmiersprachen programmiert sein. Bei besonders hohen Sicherheitsanforderungen ist auch eine Redundanz auf 3- oder mehrfacher Ebene denkbar. Dementsprechend können auch drei oder mehr Prozessoren vorgesehen werden, welche in unterschiedlichen Programmiersprachen programmiert sein können, sofern entsprechend viele Programmiersprachen zur Verfügung stehen.

Vorzugsweise wird das von dem wenigstens einen Sicherheitsschalter gelieferte Signal direkt, d.h. nicht über Latches bzw. zwischengeschaltete Zustandsspeicher, an die Ports bzw. Anschlüsse der beiden Prozessoren angelegt. Um die erforderlichen Anforderungen der elektromagnetischen Verträglichkeit zu erfüllen, werden die Signale über Selektionsschaltungen gefiltert. Hierdurch wird vermieden, dass sich Komplikationen bei der Übermittlung des sicherheitsrelevanten Signals des Sicherheitsschalters ohne eigene Auswerteelektronik an die erfindungsgemäß beabstandete Auswerteelektronik ergeben.

In besonders vorteilhafter Weise können weitere Signale weiterer Sicherheitsschalter, beispielsweise zweier Stelltaster einer Zweihandsteuerung, von der erfindungsgemäß beabstandeten Auswerteelektronik ausgewertet werden. Auch die weiteren Sicherheitsschalter können ohne eigene Auswerteelektronik ausgebildet sein, da die Auswertung der Signale aller Sicherheitsschalter mit Hilfe derselben Auswerteelektronik erfolgen kann, welche funktionsmäßig zentral an irgendeiner geeigneten Stelle an oder innerhalb des Gehäuses der gefahrbringenden Maschine angeordnet ist. Es wird somit deutlich, dass eine erfindungsgemäß angeordnete Auswerteelektronik die Reparaturkosten und Flexibilität sämtlicher Sicherheitsschalter der Maschine beeinflußt.

Als weiterer Sicherheitsschalter kommen insbesondere die Bedienelemente einer Zweihandsteuerung in Frage. Sie bestehen vorzugsweise aus zwei Stelltastern, welche soweit voneinander beabstandet sind, dass sie der Bediener der gefahrbringenden Maschine nicht mit einer Hand betätigen kann. Er benötigt daher beide Hände, um durch Drücken beider Stelltaster zu veranlassen, dass die gefahrbringende Maschine auch bei nicht von der Tür verschlossenem, gefahrbringendem Bereich ihren Betrieb aufnimmt. Selbst wenn sich der Bediener mit nur einer Hand in den gefahrbringenden. Bereich bewegen will, muß er einen der Stelltaster loslassen, was zur Folge hat, dass die gefahrbringende Bewegung sofort gestoppt wird.

Ein bevorzugtes Anwendungsgebiet der erfindungsgemäßen Steuerungsvorrichtung ist der Bereich der Ballenpressen, wie sie insbesondere den Fig. 8 bis 10 entsprechen. Die vorliegende Erfindung kann jedoch im weitesten Sinne bei all denjenigen Maschinen Anwendung finden, bei denen ähnliche Sicherheitsprobleme auftreten wie bei Ballenpressen. Dies gilt für jede Art von Pressen, wie beispielsweise Stanz-und Tiefziehpressen, sowie für jede Art von Werkzeugmaschinen, beispielsweise Dreh-, Fräs-, Räum- oder Schleifmaschinen.

Nachfolgend wird eine Ausführungsform der vorliegenden Erfindung am Beispiel der Anwendung für eine Ballenpresse sowie anhand der beigefügten Zeichnungen beschrieben. Es zeigen:
- Fig. 1: eine schematische Darstellung einer efindungsgemäß ausgebildeten Steuerungsvörrichtung;
- Fig. 2: ein Blockschaltbild der Hardware einer erfindungsgemäß ausgebildeten Steuerungsvorrichtung;
- Fig. 3: ein Flußdiagramm, welches einen Teil des in einem ersten Prozessor (Master-Prozessor) ablaufenden Programms zeigt;
- Fig. 4: ein Flußdiagramm, welches einen weiteren Teil des in dem ersten Prozessor (Master-Prozessor) ablaufenden Programms zeigt;
- Fig. 5: ein Flußdiagramm, welches den Programmablauf der Zweihandsteuerung in dem ersten Prozessor (Master-Prozessor) zeigt;
- Fig. 6: ein Flußdiagramm, welches einen Teil des in einem zweiten Prozessor (Slave-Prozessor) ablaufenden Programms zeigt;
- Fig. 7: ein Flußdiagramm, welches den Programmablauf der Zweihandsteuerung in dem zweiten Prozessor (Slave-Prozessor) zeigt;
- Fig. 8: eine Frontansicht einer aus dem Stand der Technik bekannten Ballenpresse;
- Fig. 9: ein vergrößertes Detail der Frontansicht gemäß Fig. 8; und
- Fig. 10: eine Ansicht des vergrößerten Details gemäß Fig. 9 von oben.

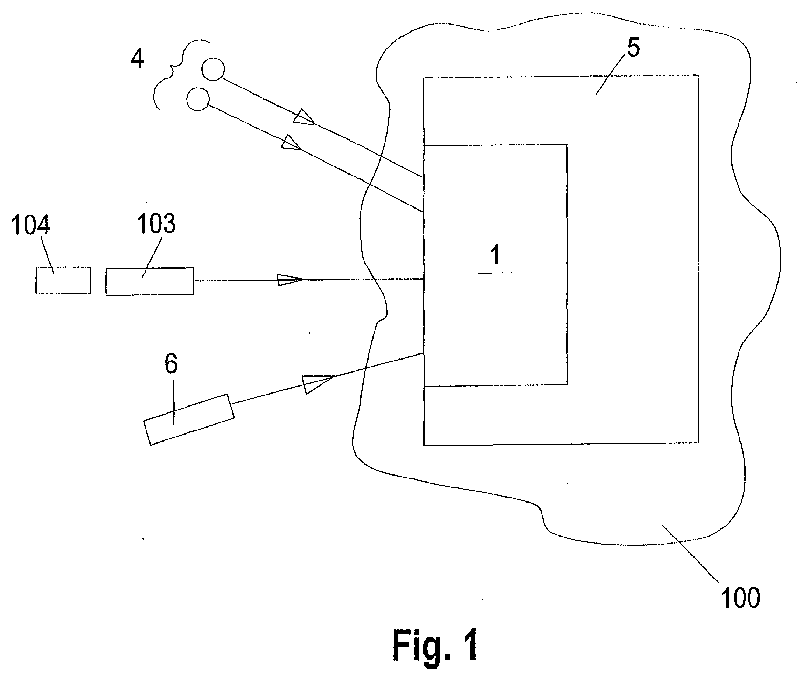

In Fig. 1 ist ein schematisch gezeichneter Ausschnitt der Ballenpresse 100 zu erkennen. Innerhalb des Gehäuses der Ballenpresse 100 ist die Steuerelektronikplatine 5 angeordnet, auf welcher sich bei der gezeigten Ausführungsform auch die zentrale Auswerteelektronik 1 für die drei gezeigten Sicherheitsschalter befindet. Bei dem in Fig. 1 oberen Sicherheitsschalter handelt es sich um zwei Stelltaster 4 einer Zweihandsteuerung, bei dem in Fig. 1 in der Mitte gezeigten Sicherheitsschalter um einen Reed-Kontaktschalter 103 ohne eigene Auswerteelektronik und bei dem in Fig. 1 unten gezeigten Sicherheitsschalter um einen 90°-Schalter 6, dessen Signal angibt, ob die Preßschachttür 101 um eine Schwenkwinkel von mindestens 90° geöffnet ist. Der 90°-Schalter 6 ist bei Ballenpressen bestimmter Größenordnung mit automatischem Ballenauswurf vorhanden, um eine Gefährdung des Bedieners bei nicht hinreichend geöffneter Preßschachttür 101 auszuschließen. Bei der Schaltfahne 104 für den Reed-Kontaktschalter 103 handelt es sich um einen kodierten bzw. polarisierten Dauermagneten.

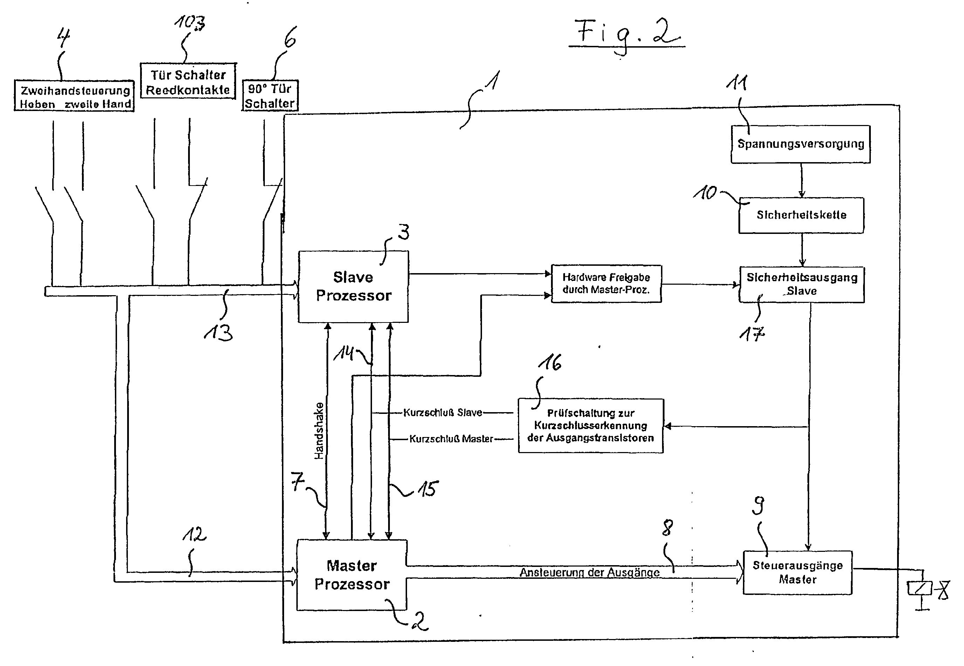

In Fig. 2 ist der redundante Aufbau der erfindungsgemäßen Steuerungsvorrichtung gezeigt. Die auf der Steuerelektronikplatine 5 gemäß Fig. 1 befindliche Auswerteelektronik 1 ist in Fig. 2 genauer dargestellt. Sie umfaßt einen ersten Prozessor 2, der im folgenden Master-Prozessor 2 genannt wird, sowie einen zweiten Prozessor 3, der im folgenden Slave-Prozessor 3 genannt wird. Um sowohl die Wahrscheinlichkeit von Logikfehlem als auch von Syntaxfehlern der Programme der Prozessoren zu minimieren, werden vorzugsweise zwei Prozessoren 2, 3 unterschiedlicher Hersteller eingesetzt, welche zusätzlich noch in unterschiedlichen Programmiersprachen programmiert wurden. Es kommen beispielsweise die Prozessoren PHILIPS 80c552 und ZILOG Z86 in Frage. Als Programmiersprachen können C einerseits sowie Assembler andererseits verwendet werden. Die sicherheitsrelevanten Signale der Stelltaster 4, des Reed-Kontaktschalters 103 und des 90°-Schalters 6 werden direkt, d.h. nicht über Latches bzw. Zustandsspeicher, an die Ports bzw. Anschlüsse des Master-Prozessors 2 und des Slave-Prozessors angelegt.

Über eine Handshake- bzw. Kommunikationsleitung 7 (Signal Slave alive, Master alive) kommunizieren die beiden Prozessoren 2, 3 nach dem Prinzip des hardwaremäßigen Watchdogs miteinander. Jeder der Prozessoren 2, 3 prüft, ob innerhalb von 0,5 Sec. der jeweils andere Prozessor 3, 2 einen Flankenwechsel bzw. ein aus/ein-Signal erzeugt hat. Nur wenn dieses zeitliche Limit eingehalten wird, kann der Slave-Transistor von dem Slave-Prozessor 3 durchgeschaltet werden. Der Master-Prozessor 2 steuert gemäß Pfeil 8 die Steuerausgänge 9 an, welche mit dem Pressenantrieb verbunden sind und diesen je nach Ansteuerung durch den Master-Prozessor 2 an oder ausschalten.

Mittels der Signale Kurzschluß Slave und Kurzschluß Master, welche durch eine Prüfschaltung 16 zur Kurzschlußerkennung generiert werden, werden die eingeschalteten Ausgänge überwacht. Kann ein Ausgang nicht mehr gesteuert werden bzw. ist er defekt, so erkennt dies der jeweils andere Prozessor 2 oder 3 und sperrt die Ansteuerung der Steuerausgänge 9 bzw. des in Fig. 2 gezeigten Ausgangs 17.

Die Steuerausgänge 9 bzw. 17 sind Leistungsausgänge, welche für 2 Ampere Dauerstrom ausgelegt sind. Es können Leistungstransistoren verwendet werden, welche mit einer Stromstärke von bis zu ca. 15 Ampere arbeiten können. Zusätzlich kann die Stromstärke über eine Summenstrommessung auf ca. 2 Ampere begrenzt werden.

Alle sicherheitsrelevanten Eingänge sind hardwaremäßig als Sicherheitskette 10 ausgebildet und schalten direkt die Spannungsversorgung 11 von der Ausgangsstufe ab. Die Sicherheitskette 10 umfaßt den Kontakt des Motorschutzrelais und den ggf. vorhandenen Notausschalter sowie zusätzliche Wartungsklappen.

Erzeugt beispielsweise der Reed-Kontaktschalter 103 ein Signal, so wird dieses gemäß der Pfeile 12 bzw. 13 sowohl dem Master-Prozessor 2 als auch dem Slave-Prozessor 3 zugeführt. Jeder Prozessor 2, 3 überprüft für sich, ob ein plausibler Zustand vorliegt. Darüber hinaus überprüft jeder Prozessor 2, 3 die Betriebszustände des anderen Prozessors 3, 2 sowie den Zustand der Ausgangsstufen. Erst wenn von beiden Prozessoren 2, 3 ausschließlich plausible Zustände festgestellt werden und somit ein sicherer Pressenbetrieb ohne Unfallgefahr für den Bediener möglich ist, werden von den beiden Prozessoren 2, 3 die jeweils zugehörigen Ausgänge 9 bzw. 17 aufgeschaltet.

Dieselbe Überwachungsprozedur wie im Falle des Signals von dem Reed-Kontaktschalter 103 wird von derselben Auswerteelektronik 1 auch dann durchgeführt, wenn die beiden Stelltaster 4 bzw. der 90°-Schalter 6 ein Signal liefern.

Im Falle der Zweihandsteuerung wird der Steuerbefehl, welcher den Pressenantrieb aktiviert hat, sofort zurückgezogen, wenn einer der oder beide Stelltaster 4 losgelassen werden. Die gefahrbringende Bewegung des Preßstempels wird dann sofort gestoppt. Durch synchrone Betätigung, d.h. durch quasi-gleichzeitige Betätigung beider Stelltaster 4 innerhalb eines Zeitraums von höchstens 0,5 Sec., wird ausgeschlossen, dass zwei Personen die gefahrbringende Bewegung des Preßstempels der Ballenpresse 100 starten. Werden die Stelltaster 4 nicht synchron bzw. quasi-gleichzeitig betätigt, so kommt kein Ausgangssignal zustande. In diesem Fall müssen beide Stelltaster 4 losgelassen und neu betätigt werden. Auch hier überwachen beide Prozessoren 2, 3 die Sicherheitsfunktion der Zweihandsteuerung. Stellt ein Prozessor 2, 3 einen Fehler fest, so wird automatisch der andere Prozessor 3, 2 informiert und gesperrt. Die Überwachungsprozedur ist dieselbe wie diejenige bei der Überwachung der Türsicherheit.

Wie in Fig. 2 zu erkennen ist, weist die Auswerteelektronik 1 auch zwei zwischen dem Master-Prozessor 2 und dem Slave-Prozessor 3 verlaufende Leitungen 14 und 15 sowie die Prüfschaltung 16 auf, mit deren Hilfe festgestellt werden kann, ob ein Kurzschluß des Master- und/oder Slave-Transistors vorliegt.

Darüber hinaus ermöglicht die Auswerteelektronik 1 noch weitere Sicherheitsfunktionen zur Steuerung der Ballenpresse. So können insbesondere die Phasenfolge bzw. Drehrichtung des verwendeten Drehstromnetzes sowie ein Phasenausfall bzw. das Fallen oder Ansprechen einer Sicherung überwacht werden. Auch die Temperatur des in dem Hydraulikantrieb des Preßstempels verwendeten Hydrauliköls kann in die Überwachung eingebunden werden. Die jeweils zugehörigen Betriebszustände können auf einer Anzeigeeinrichtung, vorzugsweise einem LCD-Bildschirm, dargestellt werden. Über dieselbe Anzeigeeinrichtung kann auch ein geeignetes Fehlermanagement vorgesehen werden.

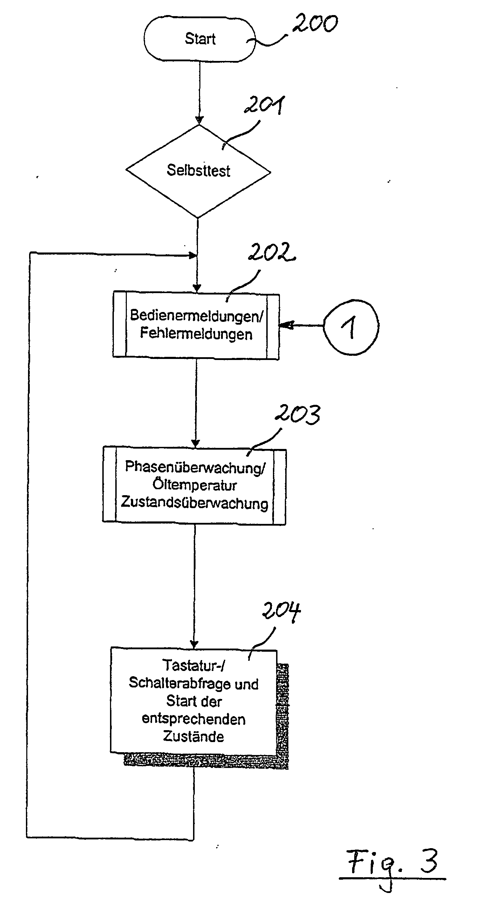

Im folgenden werden die in dem Master-Prozessor 2 und dem Slave-Prozessor 3 ablaufenden Programmschritte anhand der Fig. 3 bis 7 erläutert.

Fig. 3 zeigt das in dem Master-Prozessor 2 ablaufende Programm. Nachdem das Programm in Schritt 200 gestartet wurde erfolgt in Schritt 201 zunächst ein Selbsttest des Master-Prozessors 2. In Abhängigkeit von dem Ergebnis des Selbsttests werden in Schritt 202 Bedienermeldungen und/oder Fehlermeldungen auf dem LCD-Bildschirm angezeigt. Anschließend werden in Schritt 203 verschiedene Zustandsparameter überwacht, insbesondere die Phasenfolge bzw. Drehrichtung des als Stromversorgung verwendeten Drehstromnetzes sowie die Temperatur des Hydrauliköls. In Schritt 204 werden schließlich die aktuellen Tastatur- und Schaltereinstellungen abgefragt und die entsprechenden Zustände gestartet. Nach dem Schritt 204 springt das Programm zu Schritt 202 zurück.

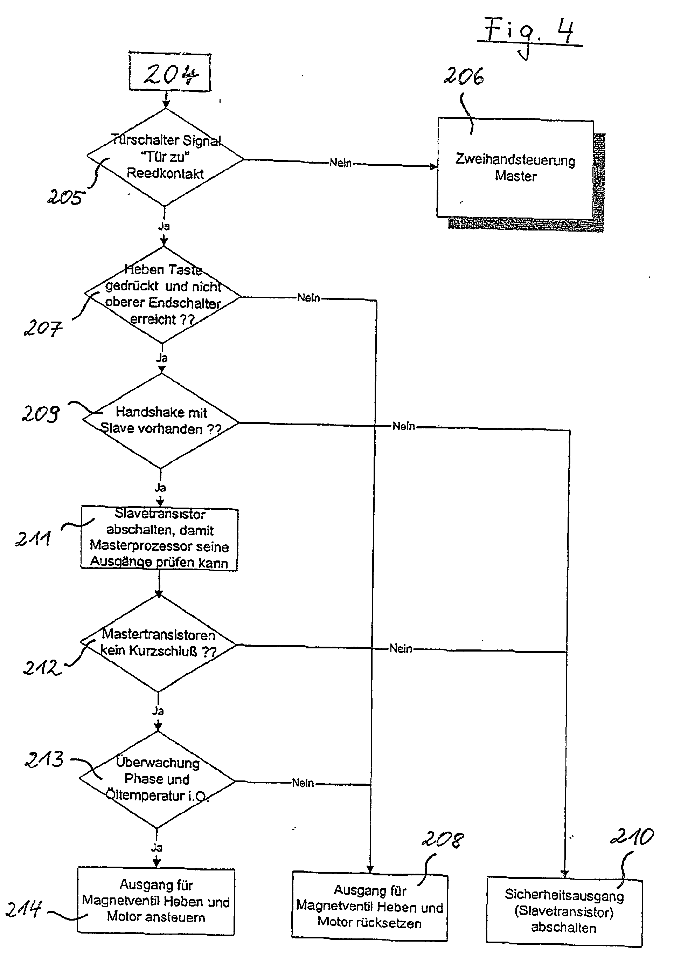

Für die Beschreibung des in Fig. 4 gezeigten und gemäß Schritt 204 in dem Master-Prozessor 2 ablaufenden Programms sei beispielhaft angenommen, dass sowohl die Preßschachttür 101 als auch die Einfüllschachttür 102 geschlossen ist und der Benutzer die "Heben"-Taste drückt, wodurch der Pressenantrieb veranlaßt wird, den nach einem Preßvorgang in einer unteren Stellung befindlichen Preßstempel anzuheben und die Ballenpresse 100 somit für einen neuen Preßvorgang vorzubereiten.

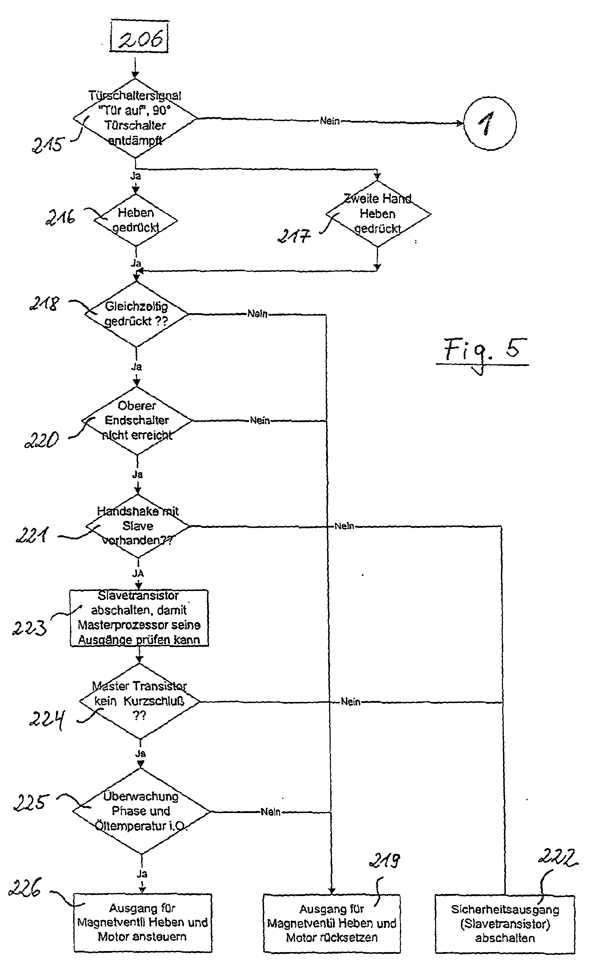

In Schritt 205 stellt der Master-Prozessor 2 dann zunächst fest, ob der Reed-Kontaktschalter 103 ein Signal liefert, gemäß welchem die Türen 101 und 102 geschlossen sind. Ist dies nicht der Fall, so verzweigt das Programm zur Zweihandsteuerung 206 des Master-Prozessors 2, welche in Fig. 5 dargestellt ist. Sind beide Türen 101 und 102 geschlossen, so wird in Schritt 207 abgefragt, ob der die obere Totpunktstellung des Preßstempels kennzeichnende obere Endschalter von dem Preßstempel bereits erreicht wurde oder nicht. Wurde der obere Endschalter bereits erreicht, so verzweigt das Programm zu Schritt 208, wo der Steuerausgang für das Abschalten des den Preßstempel anhebenden Pressenantriebs abgeschaltet wird und der Preßstempel dementsprechend sofort zum Stillstand kommt.

Wird in Schritt 207 festgestellt, dass der obere Endschalter noch nicht erreicht wurde, so verzweigt das Programm zu Schritt 209 und ermittelt, ob über die Kommunikationsleitung 7 gemäß Fig. 2 ein Handshake mit dem Slave-Prozessor 3 gegeben ist. Ist dies nicht der Fall, so wird mit Schritt 210 fortgefahren, in welchem der dem Slave-Prozessor 3 zugeordnete und in Fig. 2 dargestellte Sicherheitsausgang 17 bzw. der Slave-Transistor abgeschaltet wird. Dies hat zur Folge, dass die Spannungsversorgung 11 unterbrochen wird und der Preßstempel sofort zum Stillstand kommt. Schritt 209 repräsentiert somit die Überwachungsfunktion, welche der Slave-Prozessor 3 über den Master-Prozessor 2 ausübt. Wird in Schritt 209 festgestellt, dass ein Handshake vorhanden ist, so wird in Schritt 211 der Slave-Transistor abgeschaltet, um dem Master-Prozessor 2 die Gelegenheit zu geben, seine Ausgänge zu prüfen.

In Schritt 212 wird abgefragt, ob bei den Master-Transistoren ein Kurzschluß aufgetreten ist. Ist dies der Fall, so wird wieder zu Schritt 210 verzweigt, der wie im Falle der Verzweigung von Schritt 209 aus die Spannungsversorgung 11 unterbricht. Ist kein Kurzschluß vorhanden, so wird in Schritt 213 abgefragt, ob die Phasenfolge des Drehstromnetzes der gewünschten Drehrichtung entspricht und die Betriebstemperatur des Hydrauliköls in ihrem akzeptablen Betriebsbereich liegt. Ist dies nicht der Fall, so wird zu Schritt 208 verzweigt, gemäß welchem der Pressenantrieb sofort abgeschaltet wird. Ergibt die Überwachung in Schritt 213, dass sich Phasenfolge und Öltemperatur in den gewünschten Betriebszuständen befinden, so wird zu Schritt 214 verzweigt, gemäß welchem der Steuerausgang zum Anheben des Preßstempels in seinem bereits angesteuerten Zustand verbleibt.

Nun wird der Programmablauf der Zweihandsteuerung gemäß Schritt 206 in Fig. 4 anhand des Flußdiagramms gemäß Fig. 5 erläutert. Zunächst wird in Schritt 215 geprüft, ob die Türen 101 und 102 der Ballenpresse 100 gemäß Signal des Reed-Kontaktschalters 103 geöffnet oder geschlossen sind. Sind sie laut diesem Signal geschlossen, so ist keine Zweihandsteuerung erforderlich und das Programm verzweigt zu ① bzw. Schritt 202 in Fig. 3. Wird in Schritt 215 festgestellt, dass eine der Türen 101 und 102 geöffnet ist, so wird zu den Schritten 216 und 217 verzweigt, in welchen abgefragt wird, ob beide Stelltaster 4 der Zweihandsteuerung gedrückt sind. Ist dies der Fall, so wird in Schritt 218 ermittelt, ob die beiden Stelltaster 4 quasi-gleichzeitig, d.h. innerhalb von beispielsweise weniger als 0,5 Sec., gedrückt wurden. Ist dies nicht der Fall, so wird mit Schritt 219 fortgefahren, der dem Schritt 208 in Fig. 4 entspricht und den Pressenantrieb sofort abschaltet. Wurden die beiden Stelltaster 4 gleichzeitig gedrückt, so wird in Schritt 220 abgefragt, ob der Pressenstempel bereits den oberen Endschalter erreicht hat. Ist dies der Fall, so wird erneut zu Schritt 219 verzweigt und der Pressenantrieb abgeschaltet.

Sofern der Preßstempel den oberen Endschalter noch nicht erreicht hat, wird in Schritt 221 abgefragt, ob über die Kommunikationsleitung 7 ein Handshake mit dem Slave-Prozessor 3 vorhanden ist. Fehlt der Handshake aus irgendeinem Grund, so wird zu Schritt 222 verzweigt, der dem Schritt 210 in Fig. 4 entspricht und die Spannungsversorgung 11 unterbricht. Ist der Handshake gegeben, so wird in Schritt 223 der Slave-Transistor abgeschaltet, um dem Master-Prozessor 2 die Gelegenheit zu geben, seine Steuerausgänge zu überprüfen.

Anschließend wird in Schritt 224 festgestellt, ob bei dem Master-Transistor ein Kurzschluß aufgetreten ist. Ist dies der Fall, so wird wieder zu Schritt 222 verzweigt und die Spannungsversorgung 11 unterbrochen. Liegt kein Kurzschluß vor, so erfolgt in Schritt 225 erneut die Überwachung der Phasenfolge des Drehstromnetzes sowie der Temperatur des Hydrauliköls. Falls hier Unregelmäßigkeiten auftreten, wird zu Schritt 219 verzweigt und der Pressenantrieb sofort abgeschaltet. Treten keine Unregelmäßigkeiten auf, so wird mit Schritt 226 fortgefahren, der Schritt 214 in Fig. 4 entspricht und in dem hier beschriebenen Beispielfall den Steuerausgang zum Anheben des Preßstempels in angesteuertem Zustand beläßt.

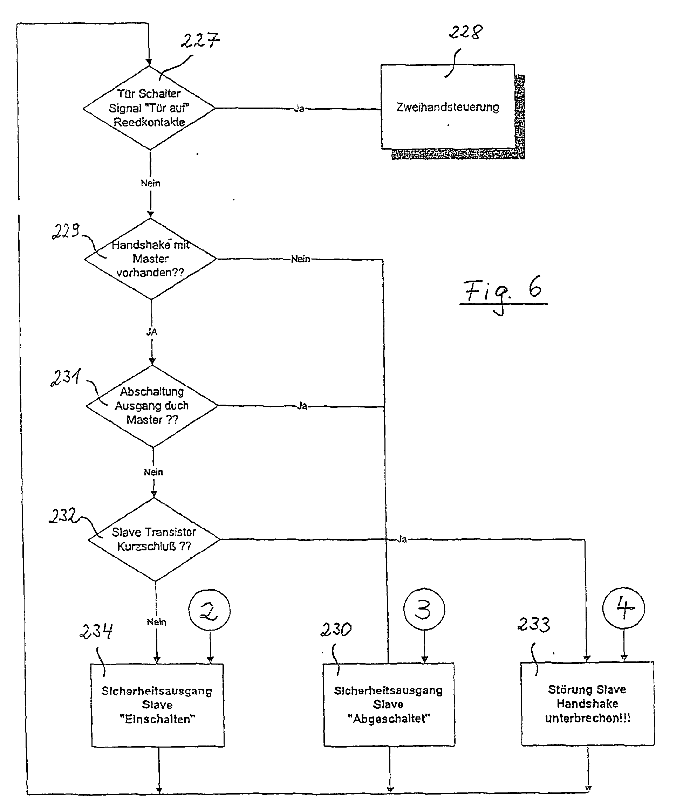

In Fig. 6 ist der Ablauf des in dem Slave-Prozessor 3 ablaufenden Programms dargestellt. In Schritt 227 wird zunächst ermittelt, ob eine der Türen 101 und 102 gemäß des von dem Reed-Kontaktschalter gelieferten Signals geöffnet ist. Falls dies der Fall ist, wird zu der Zweihandsteuerung des Slave-Prozessors 3 gemäß Schritt 228 verzweigt. Ist keine der Türen 101 und 102 geöffnet, so wird nun in Schritt 229 slaveprozessorseitig überprüft, ob über die Kommunikationsleitung 7 ein intakter Handshake mit dem Master-Prozessor 2 besteht. Bei fehlendem Handshake wird mit Schritt 230 fortgefahren, in welchem der Sicherheitsausgang 17 des Slave-Prozessors 3 sofort abgeschaltet wird, so dass der Preßstempel wegen fehlender Spannungsversorgung 11 stehenbleibt.

Nach der Handshakeüberprüfung wird in Schritt 231 abgefragt, ob der Master-Prozessor 2 die Steuerausgänge 9 abgeschaltet hat oder nicht. Ist dies der Fall, so wird erneut zu Schritt 230 verzweigt und der Sicherheitsausgang 17 des Slave-Prozessors 3 abgeschaltet. Wurden die Steuerausgänge 9 nicht durch den Master-Prozessor 2 abgeschaltet, so erfolgt in Schritt 232 die Überprüfung, ob bei dem Slave-Transistor ein Kurzschluß aufgetreten ist. Ist dies der Fall, so wird zu Schritt 233 verzweigt und sofort der Handshake zwischen Master-Prozessor 2 und Slave-Prozessor 3 unterbrochen. Liegt kein Kurzschluß vor, so wird in Schritt 234 der dem Slave-Prozessor 3 zugeordnete Sicherheitsausgang 17 eingeschaltet, so dass die Spannungsversorgung 11 zur Verfügung steht.

Nach den Schritten 234, 230 bzw. 233 verzweigt das Programm des Slave-Prozessors 3 erneut zu Schritt 227, so dass die in Fig. 6 gezeigte Programmroutine erneut startet.

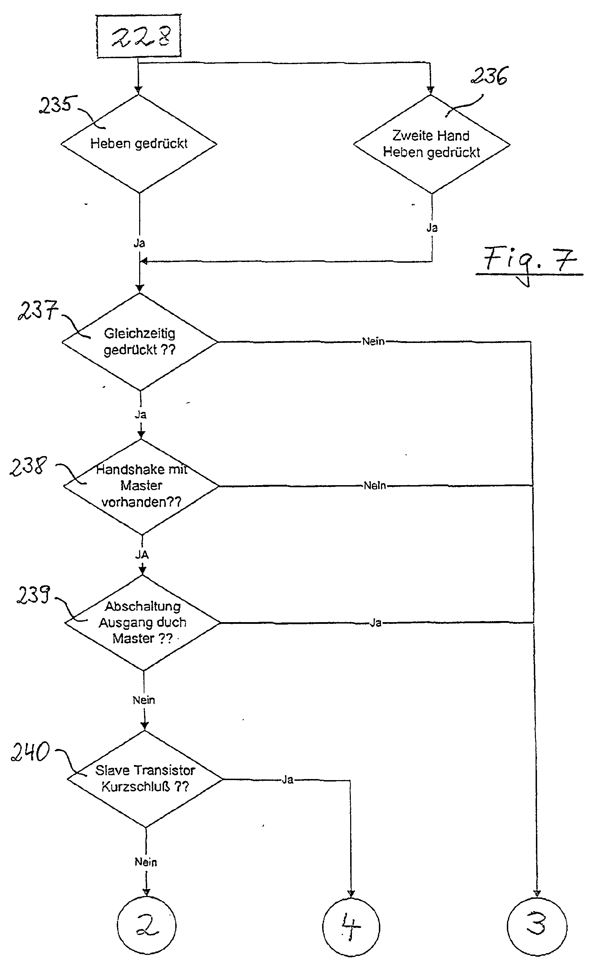

Fig. 7 zeigt die gemäß Schritt 228 in Fig. 6 durchzuführende Programmroutine der Zweihandsteuerung des Slave-Prozessors 3. In den Schritten 235 und 236 wird zunächst festgestellt, ob beide Stelltaster 4 der Zweihandsteuerung gedrückt sind. Ist dies der Fall, so wird in Schritt 237 ermittelt, ob die Stelltaster 4 quasi-gleichzeitig, d.h. beispielsweise innerhalb von 0,5 Sec., gedrückt wurden. Ist dies nicht der Fall, so wird zu ③ in Fig. 6 verzweigt, also zu Schritt 230, so dass der dem Slave-Prozessor 3 zugeordnete Sicherheitsausgang 17 abgeschaltet wird. Wurden die beiden Stelltaster 4 quasi-gleichzeitig gedrückt, so folgt anschließend in Schritt 238 die Abfrage, ob über die Kommunikationsleitung 7 der Handshake mit dem Master-Prozessor 2 vorhanden ist. Ist kein Handshake vorhanden, so wird erneut zu ③ bzw. Schritt 230 in Fig. 6 verzweigt. Ist ein fehlerfreier Handshake vorhanden, so wird in Schritt 239 abgefragt, ob die dem Master-Prozessor 2 zugeordneten Steuerausgängen 9 abgeschaltet wurden oder nicht. Ist dies der Fall, so wird wiederum zu ③ bzw. Schritt 230 in Fig. 6 verzweigt. Wurden die Steuerausgänge 9 nicht abgeschaltet, so wird in Schritt 240 überprüft, ob bei dem Slave-Transistor ein Kurzschluß aufgetreten ist oder nicht. Liegt ein Kurzschluß vor, so wird zu ④ bzw. Schritt 233 in Fig. 6 verzweigt und dementsprechend der Handshake mit dem Master-Prozessor 2 unterbrochen. Liegt kein Kurzschluß vor, so wird mit ② bzw. Schritt 234 in Fig. 6 fortgefahren, was bedeutet, dass der dem Slave-Prozessor 3 zugeordnete Sicherheitsausgang 17 eingeschaltet bleibt und die Spannungsversorgung 11 nach wie vor zur Verfügung steht.

## Patentansprüche

1. Steuerungsvorrichtung zur Steuerung sicherheitsrelevanter Funktionen einer Gefahr bringenden Maschine (100), deren Gefahr bringender Bereich (b, c) mittels wenigstens einer Tür (101, 102) verschließbar ist, wobei die Stellung der Tür (101, 102) mittels wenigstens eines Sicherheitsschalters (103) überwachbar ist, der ein Signal liefert, welches von einer Auswerteelektronik (1) auswertbar ist, wobei die Auswerteelektronik (1) an einer von dem Sicherheitsschalter (103) beabstandeten Stelle der Maschine (100) angeordnet ist,
**dadurch gekennzeichnet, dass**
die Auswerteelektronik (1) als Bestandteil einer Steuerelektronikanordnung (5) ausgebildet ist, welche in oder an der Maschine (100) zur Steuerung sonstiger Betriebsfunktionen der Maschine (100) vorgesehen ist.

2. Steuerungsvorrichtung nach Anspruch 1,
**dadurch gekennzeichnet, dass**
die Auswerteelektronik (1) einen ersten Prozessor (2) und einen zweiten Prozessor (3) umfasst, welche voneinander unabhängig programmiert sind und sich gegenseitig überwachen.

3. Steuerungsvorrichtung nach Anspruch 2,
**dadurch gekennzeichnet, dass**
der erste (2) und der zweite (3) Prozessor in unterschiedlichen Programmiersprachen programmiert sind.

4. Steuerungsvorrichtung nach Anspruch 2 oder 3,
**dadurch gekennzeichnet, dass**
das Signal des Sicherheitsschalters (103) direkt an die Anschlüsse des ersten (2) und des zweiten (3) Prozessors angelegt ist.

5. Steuerungsvorrichtung nach einem der vorangehenden Ansprüche,
**dadurch gekennzeichnet, dass**
wenigstens ein weiterer Sicherheitsschalter vorgesehen ist, dessen Signal ebenso von der Auswerteelektronik (1) auswertbar ist.

6. Steuerungsvorrichtung nach Anspruch 5,
**dadurch gekennzeichnet, dass**
der weitere Sicherheitsschalter von zwei Stelltastern (4) einer Zweihandsteuerung gebildet wird.

7. Ballenpresse mit einer Steuerungsvorrichtung nach einem der vorangehenden Ansprüche, wobei der Gefahr bringende Bereich von dem Einfüllschacht (b) und/oder dem Pressschacht (c) gebildet wird.

## Claims

1. Control device for controlling safety-relevant functions of a machine (100) which conveys a risk, the risk-conveying region (b, c) of which is closable by means of at least one door (101, 102), wherein the setting of the door (101, 102) can be monitored by means of at least one safety switch (103) which delivers a signal able to be evaluated by an electronic evaluating system (1), wherein the electronic evaluating system (1e) is arranged at a place of the machine (100) spaced from the safety switch (103), **characterised in that** the electronic evaluating system (1) is constructed as a component of an electronic control arrangement (5) which is provided in or at the machine (100) for controlling other operating functions of the machine (100).

2. Control device according to claim 1, **characterised in that** the electronic evaluating system (1) comprises a first processor (2) and a second processor (2) which are programmed independently of one another and carry out reciprocal monitoring.

3. Control device according to claim 2, **characterised in that** the first processor (2) and second processor (3) are programmed in different programming languages.

4. Control device according to claim 2 or 3, **characterised in that** the signal of the safety switch (103) is applied directly to the terminals of the first processor (2) and the second processor (3).

5. Control device according to one of the preceding claims, **characterised in that** at least one further safety switch is provided, the signal of which can equally be evaluated by the electronic evaluating system (1).

6. Control device according to claim 5, **characterised in that** the further safety switch is formed by two setting buttons (4) of a two-handed control.

7. Bale press with a control device according to one of the preceding claims, wherein the risk-conveying region is formed by the filling shaft (b) and/or the press shaft (c).

## Revendications

1. Dispositif de commande pour la commande de fonctions relatives à la sécurité d'une machine présentant des dangers (100), dont la zone présentant des dangers (b, c) peut être fermée au moyen d'au moins une porte (101, 102), la position de la porte (101, 102) pouvant être surveillée au moyen d'au moins un interrupteur de sécurité (103) qui fournit un signal qui peut être évalué par une électronique d' évaluation (1), l'électronique d'évaluation (1) étant disposée à un endroit de la machine (100) éloigné de l'interrupteur de sécurité (103),
**caractérisé par le fait**
**que** l'électronique d'évaluation (1) est réalisée en tant que partie intégrante d'une électronique de commande (5) qui est prévue dans ou sur la machine (100) pour commander d'autres fonctions d'exploitation de la machine (100).

2. Dispositif de commande selon la revendication 1,
**caractérisé par le fait**
**que** l'électronique d'évaluation (1) comprend un premier processeur (2) et un deuxième processeur (3) qui sont programmés indépendamment l'un de l'autre et se surveillent mutuellement.

3. Dispositif de commande selon la revendication 2,
**caractérisé par le fait**
**que** le premier (2) et le deuxième processeur (3) sont programmés dans des langages de programmation différents.

4. Dispositif de commande selon la revendication 2 ou 3,
**caractérisé par le fait**
**que** le signal de l'interrupteur de sécurité (103) est directement appliqué aux connexions du premier (2) et du deuxième processeur (3).

5. Dispositif de commande selon l'une des revendications précédentes,
**caractérisé par le fait que**
qu'il est prévu au moins un autre interrupteur de sécurité dont le signal peut également être évalué par l'électronique d'évaluation (1).

6. Dispositif de commande selon la revendication 5,
**caractérisé par le fait**
**que** l'autre interrupteur de sécurité est formé par deux poussoirs de commande (4) d'une commande à deux mains.

7. Presse à balles avec un dispositif de commande selon l'une des revendications précédentes dans laquelle la zone présentant des dangers est formée par le puits de remplissage (b) et/ou le puits de pressage (c).
